# EUROPÄISCHE PATENTSCHRIFT

(11) **EP 0 558 908 B1**
(45) Veröffentlichungstag und Bekanntmachung des Hinweises auf die Patenterteilung: **02.04.1997**
(21) Anmeldenummer: 93101018.5
(22) Anmeldetag: 23.01.1993
(51) Int. Cl.: D21B 1/32

(54) **Aufbereitung und Verfahren von Altpapier**
Process and treatment of waste paper
Procédé et traitement de vieux papiers

(30) Priorität: 04.03.1992 DE 4206748; 12.05.1992 DE 4215532; 26.06.1992 DE 4221028
(43) Veröffentlichungstag der Anmeldung: 08.09.1993
(73) Patentinhaber: J.M. Voith GmbH, D-89522 Heidenheim (DE)
(72) Erfinder: Dörflinger, Hans-Dieter, W-7920 Heidenheim (DE); Schwarz, Michael, W-7920 Heidenheim (DE)
(74) Vertreter: Weitzel, Wolfgang, Dr.-Ing.

(56) Entgegenhaltungen:
- EP-A- 0 271 427
- DE-C- 3 200 893
- FR-A- 2 476 164
- GB-A- 1 228 276

## Beschreibung

Die Erfindung betrifft eine Aufbereitung von Altpapier in einem Deinking-Verfahren mit einer Flotation, der mindestens einer weiteren Reinigungsstufe nachgeschaltet ist. Solche Deinking-Verfahren sind in vielfacher Ausführung bekanntgeworden. Ein wesentlicher Bestandteil moderner Deinking-Anlagen ist eine selektive Flotation, die mit möglichst wenig Faserverlust eine weitgehende Befreiung der Fasersuspension von den Druckfarben bewirkt. Dabei fällt aber sehr stark mit Druckfarben verschmutzter Schaum an, der noch einen erheblichen Anteil an verwertbaren Fasern enthält, so daß die Aufbereitung dieses Schaumes das eigentliche Problem der Deinking-Anlagen ist. Gemäß der DE 15 17 227 bzw. DE 26 10 581 wurde dieser Schaum in einer Zentrifuge gereinigt, wobei der anfallende Schlamm verworfen wurde und das sogenannte, aber immer noch verschmutzte Klarwasser in einer Kläreinrichtung der Papierfabrik gereinigt wurde. Dies führt natürlich zu einer starken Belastung der Kläreinrichtung. Der Verlust an Fasern konnte nur dadurch kleingehalten werden, daß man in Sekundärzellen den Schaum vorangeschalteter Flotationsstufen sozusagen fraktioniert bzw. gereinigt hat. Dies verhinderte aber nicht die Belastung der Kläreinrichtung.

Die Aufgabe der Erfindung ist es, ein Verfahren anzugeben, das relativ kostensparend mit großer Faserausbeute und dementsprechend geringer Abfallmenge arbeitet.

Diese Aufgabe wird erfindungsgemäß durch die Merkmale des kennzeichnenden Teils des Patentanspruchs 1,9 und 12 gelöst.Jeder der Ansprüche stellt eine eigenständige, erfindungsgemäße Lösung der zuvor genannten Aufgabe dar. Durch die Nachschaltung von Siebsortiereinrichtungen hinter die selektive Flotation erreicht man eine sehr gute Faserrückgewinnung, eine geringe nachzuflotierende Flüssigkeitsmenge und einen Schlamm von verhältnismäßig großer Konsistenz, der sehr leicht auf deponierbare Konsistenz eingedickt werden kann, sowie eine relativ große Reinheit des aus der Druckentspannungsflotation rückgeführten Prozeßwassers. Die Druckentspannungsflotation arbeitet mit sehr feinen Bläschen - wird deshalb oft als Mikroflotation bezeichnet - und wird als sogenannte Totalflotation angesehen, die ohne Rücksicht auf die Art der Bestandteile diese aus der Flüssigkeit abscheidet. Durch die erfindungsgemäße Maßnahme kann die Druckentspannungsflotationsanlage relativ klein ausgelegt werden, so daß hier eine erhebliche Kosteneinsparung eintritt. Ferner werden hier auch geringe Chemikalien-Kosten verursacht. Es ist nämlich nötig, um diese Totalflotation zu erreichen, daß mit Flockungschemikalien gearbeitet wird.

Andererseits kann man auch Flotationszellen sekundärer Art in der selektiven Flotations-Anlage einsparen, wenn man den Schaum der ersten Stufen - gegebenenfalls nur der ersten Flotationsstufe - in die Druckentspannungsflotation gibt, um dort Klarwasser zu erzeugen. Auch dann hat man geringe Faserverluste, wobei man den Schaum der nachfolgenden Stufen der selektiven Flotation wieder vor die erste Stufe dieser Flotation zurückführt. In jedem Fall bietet es sich an, das Klarwasser der Druckentspannungsflotation vor der selektiven Flotation einzuleiten, um die dort benötigte niedrige Konsistenz der Fasersuspension zu erreichen.

Nachfolgend wird die Erfindung anhand der in den Figuren dargestellten Ausführungsbeispiele erläutert, welche prinzipielle Schaltungsschemata einer erfindungsgemäßen Deinking-Anlage zeigen.

Das Altpapier gelangt im allgemeinen über Plattenförderbänder 14 in Form von Ballen zu einer als Stofflöser bezeichneten Auflöseeinrichtung 1. Unter Zugabe von Wasser und eventuell Auflösechemikalien wird hier das Altpapier im allgemeinen bei einer oder auf eine relativ hohe Konsistenz von etwa 15 % aufgelöst, wobei ein Rotor 2 mit wendelförmigen Umwälzrippen 3 diese Auflösung bewirkt bzw. verstärkt. Man geht - um eine Vorabscheidung großflächiger oder schwerer Verunreinigungen zu erreichen - so vor, daß man durch eine Öffnung 6 einen Anteil der Fasersuspension über Leitung 26 einem Wirbelstörmungsapparat 10 mit laufradartigem Rotor 11 zuführt, der die Suspension in eine als rotierendes Trommelsieb 17 ausgebildete Sortiereinrichtung leitet. Diese Trommel ist hier zunächst über Arme 20 in einer Welle 18 gehalten, welche in Lagern 19 umläuft. Der Antrieb des Rotors 2 des Stofflösers 1 erfolgt über eine Welle 30 und mittels Antriebsmotor 31. Eine Schwerschmutzschleuse 29 dient dazu, um Metallstücke oder ähnlich schwere Bestandteile der Altpapierballen abzuscheiden. Über ein Sieb 7 wird aufgelöste Fasersuspension abgezogen, wobei hier ein zusätzlicher Rotor 5 diese Abscheidung in einem separaten Raum 8 hinein erleichtert, von dessen Stutzen 9 die Suspension über Leitung 28 und Pumpe 29 weitergeleitet wird. Die Suspension erhält dabei im allgemeinen durch über eine Leitung 13 zugegebenes Verdünnungswasser eine niedrigere, nämlich pumpfähige Konsistenz von etwa 4 bis 6 %. Über Leitung 34 gelangt die Suspension dann in einen Wirbelreiniger 30, danach in einen Entstipper 31 und dann in die Flotationsanlage 32 mit selektiver Flotation, um die Fasern im Prozeß möglichst weitgehend zu behalten und die Druckfarben abzutrennen. Es sind dabei mehrere Stufen 32' in Reihe geschaltet. Es wird eine Flotationsanlage benutzt, bei welcher mittels einem Überlauf der abgeschiedene, die Druckfarben enthaltende Schaum in Schaumrinnen übergeführt wird. Die Schaumrinne ist hier unterteilt in zwei Teile 33 und 33'. Dies ist aber nicht nötig, sondern es kann entgegengesetzt wie hier dargestellt, auch der sämtliche Schaum den nachgeschalteten Siebsortierstufen 36 und 37 zugeführt werden. Es ist strichpunktiert angedeutet, daß über Leitung 51 der restliche Schaum wieder vor die erste Stufe der Flotationsanlage 32 zurückgeführt wird. Als Siebsortierer werden vorzugsweise sogenannte Wäscher oder insbesondere sogenannte Druck-Siebsortierer mit Siebkörben benutzt, wobei hier der Siebkorb der ersten Siebsortierstufe 36 eine Lochung als Perforation mit einem Durchmesser der Lochung zwischen 0,3 und 0,5 mm und der Siebkorb der zweiten Siebsortierstufe 37 eine Perforation in Form von Schlitzen mit einer Schlitzweite zwischen 0,05 und 0,1 mm aufweist. In der ersten Siebsortierstufe 36 sind gröbere Bestandteile, wie insbesondere Kunststoffstückchen und ähnliches ausgeschieden, während in der zweiten Siebsortierstufe die Fasem von der Flüssigkeit getrennt werden, wobei man hier von einer Art Wäsche sprechen kann. Die Fasern werden über Leitung 44 vor die Flotationsanlage 32 zurückgegeben bzw. in deren Mischkammer eingeleitet. Das abgeschiedene Prozeßwasser der Siebsortierstufen wird in einer Druckentspannungsflotations-Anlage 39 aufbereitet, d.h. geklärt, wobei das Klarwasser über Leitung 43 auch vor die Flotationsanlage 32 rückgeführt wird. Die Leitungen 38 bzw. 38' für die zu reinigende Flüssigkeit gelangen dabei zunächst in einen Gasdispersionsreaktor 41, in welchem die Anreicherung derselben mit Luft mittels Injektoren erfolgt. Aus der Flotationseinrichtung 39 werden Verschmutzungen über Leitung 46 in Form von Sediment und über Leitung 48 in Form von abgeschaufeltem Schlamm (Schaum) abgeführt. Dieser Schlamm bzw. dieses Sediment fällt mit einer Konsistenz zwischen 6 und 8 % an und kann auf leichte Weise weiter eingedickt werden, um der Deponie zugeführt zu werden.

Die beiden Sortierstufen 36 und 37 - die ja hier vorzugsweise als Siebsortierer ausgeführt sein sollen - können auch ersetzt werden durch eine Wascheinrichtung, vorzugsweise verbunden mit einer nachgeschalteten Eindickeinrichtung. Geeignete Wascheinrichtungen sind vielfach bekannt, z.B. als die üblichen Schrägsieb-Wascheinrichtungen, oder nach US 4,686,005 oder DE 29 04 618 C2. Geeignete Eindickeinrichtungen sind bekannt z.B. aus DE 21 38 072 und US 4,722,793. Alle diese genannten Schriften beziehen sich aber nur auf einen geringen Ausschnitt aus dem Stand der Technik.

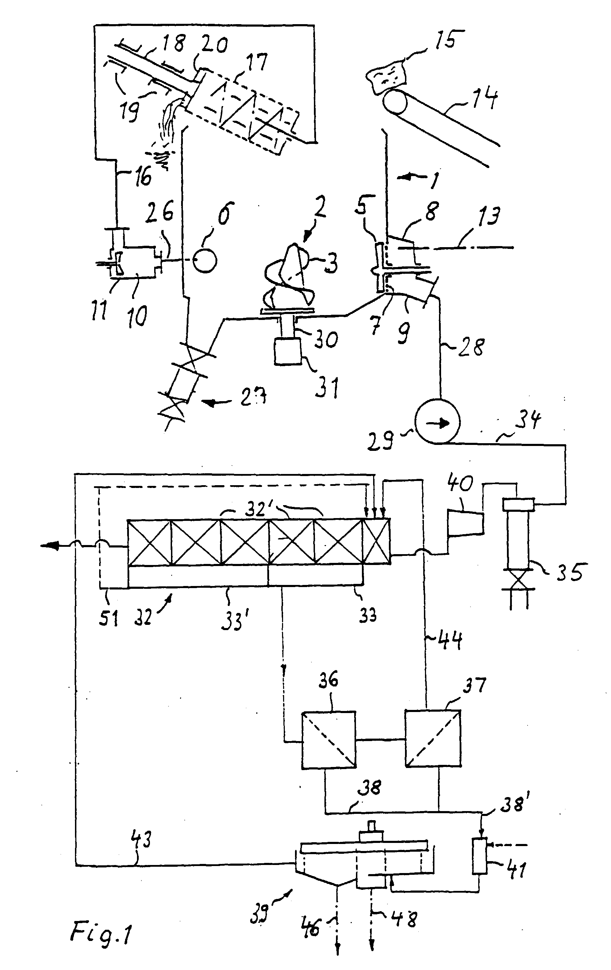

Hinsichtlich Figur 2 entspricht der hier nicht dargestellte erste Teilbereich der Deinking-Anlage demjenigen von Figur 1 und es ist hier begonnen worden mit der Darstellung der selektiven Flotation 52' mit den einzelnen Stufen 53, 53' usw. Es ist wieder eine Druckentspannungsflotationsanlage 39 vorgesehen, der in diesem Fall nur der Schaum der ersten Flotationsstufe 53 der selektiven Flotation zugeleitet wird. Das Klarwasser der Druckentspannungsflotationsanlage wird hier wieder vor die selektive Flotation 52 geleitet. Der Schlamm der übrigen Stufen der selektiven Flotation wird vor die erste Stufe derselben zurückgeführt. Dies ist eine sehr einfach aufgebaute Anlage, die relativ wenig Kosten verursacht und trotzdem eine gute Reinigungswirkung hat. Es fällt relativ wenig Schlamm mit relativ hoher Konsistenz wie im Falle von Figur 1 an.

Es ist natürlich möglich, den Schlamm von mehreren der ersten Stufen in die Druckentspannungsflotationsanlage einzuleiten und dort zu reinigen.

Es ist auch möglich, eine einfacher aufgebaute Anlage mit noch relativ geringem Abfallaufkommen vorzusehen. Hierbei kann auch vorgesehen sein, daß der der Totalflotationsanlage zugeführte Schaum über Wascheinrichtungen oder Siebeinrichtungen verbunden mit Wascheinrichtungen geleitet wird. Man hat durch Wegfall der Sekundär-Flotationsanlage auch den Vorteil einer leichteren Regelung bzw. Betriebsweise der Anlage.

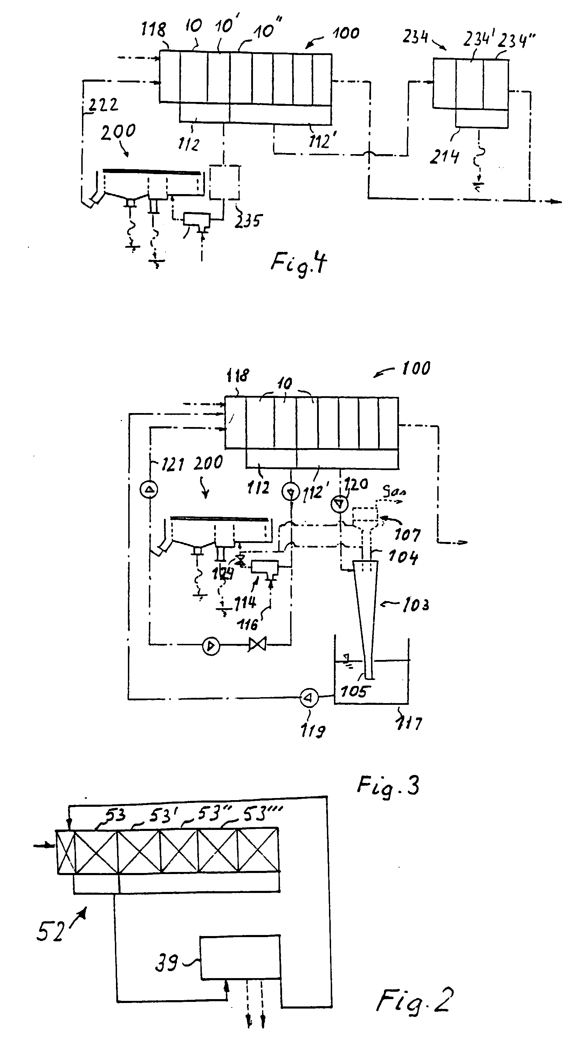

Nachfolgend wird diese Anlage anhand der Figur 3 der Zeichnung erläutert.

Die selektive Flotationsanlage 100 (Primärflotation) besteht aus einzelnen, in Reihe geschalteten Flotationszellen 10, von denen jeweils Schaum in eine Sammelrinne abgeführt wird, die hier in zwei Teile 112 und 112' unterteilt ist. Dabei gelangt der Schaum des ersten Teils 112 der Schaumrinne in die Mikroflotationsanlage 200, welche eine Entspannungsflotationsanlage ist und eine Totalflotation bewirkt. Man erhält hier Klarwasser, das über Leitung 121 vor die selektive Flotationsanlage geleitet wird. Ferner wird stark verschmutzter Schlamm erzeugt, der verworfen wird. Dieser schwimmt im allgemeinen als Schaum auf, kann aber auch zum Teil unten als Sediment abgezogen werden. Der übrige Schaum, nämlich der des Schaumrinnenteils 112', wird von Pumpe 120 einem Hydrozyklon 103 tangential zugeführt, der oben einen Abzug 104 für einen gashaltigen Kern und unten einen Abzug 105 für eine relativ weniger Schmutzpartikel enthaltende Schwerfraktion aufweist. Dabei enthält der gashaltige Kem auch noch einen gewissen Anteil an Fasern. Der Rest an Fasem geht durch das Abzugsrohr 105 mit einem Teil der Schmutzteilchen ab und wird vor die selektive Flotationsanlage 100 (in deren Mischkammer 118) zurückgeführt. Vorzugsweise wird hier ein Hydrozyklon verwendet, der sich konisch in Richtung zum Abzug für die schwerere Fraktion verjüngt. Man spart auf diese Weise die Sekundärstufe der selektiven Flotationsanlage ein. Es ist natürlich möglich, die Suspensionsmengen, die der Totalflotationsanlage 200 zugeführt werden, vorher in Wascheinrichtungen kombiniert mit Siebeinrichtungen zu reinigen, um eine Abscheidung von Fasern zu erreichen. Ein Hydrozyklon an dieser Stelle ist möglich, aber nicht so sehr empfehlenswert. Günstigerweise wird die eventuell noch gashaltige Kernfraktion des Zyklons 103 auch der Totalflotationsanlage 200 zugeführt.

Man hat hier zwar auch eine höhere Belastung der ersten Flotationsstufen 10, jedoch ist hier damit nur ein höherer Abscheidegrad verbunden. Die späteren Stufen haben kaum eine höhere Belastung. Man kann aber auch die Stufenzahl um 1 oder 2 erhöhen. Es ergibt sich aber der große Vorteil einer einfacheren Betriebsweise und Regelung, weil die Sekundärstufe der selektiven Flotation, die sonst üblich ist, vermieden ist.

Leitung 105 des Hydrozyklons entleert vorzugsweise in einen Sammelbehälter 117, aus dem Pumpe 119 die Suspension zur Mischkammer 118 der selektiven Flotation fördert.

Zur Totalflotationsanlage gehört noch ein Gasreaktor 114 mit Gasleitung 116, von dem aus die Suspension unter einem Druck zwischen 4 und 7 bar dem Hauptbehälter 200 nach Zumischung von Flockungschemikalien über ein Druckentspannungsventil 124 zugeleitet wird, ebenso wie ein Anteil Rückwasser (Klarwasser dieser Anlage).

Ein Entgasungs-(Entschäumungs-)Kopfteil 107 kann oberhalb der oberen Abzugsöffnung des Zyklons 103 an dessen Leitung 104 angeschlossen werden, um die Luft weitgehend zu entfernen bzw. Blasen zu zerstören.

Ein anderer Aspekt ist es, eine möglichst geringe Belastung der Primärstufe der selektiven Flotationsanlage zu erreichen.

Man erreicht durch den Einsatz der Totalflotationsanlage, daß der abgezogene und in die Sekundär-Flotationsanlage der selektiven Flotation geleitete Schaum nicht mehr so stark mit Schmutz belastet ist, so daß es möglich ist, den Gutstoff der Sekundärstufe der selektiven Flotationsanlage ohne weitere Flotation als Gutstoff in den Prozeß weiterzuführen.

Nachfolgend wird diese Abwandlung der Erfindung anhand der Figur 4 der Zeichnung erläutert.

Die nötigen Pumpen sind dabei nicht extra erwähnt und dargestellt.

Die Primärstufe der selektiven Flotationsanlage 100 weist hintereinandergeschaltete Flotationszellen 10, 10', 10" usw. auf, denen eine Schaumrinne zugeordnet ist, die hier in zwei Teile 112 und 112' unterteilt ist. Der Schaum des ersten Teils 112 wird der mit vorgeschaltetem Gasreaktor versehenen Totalflotationsanlage 200 zugeführt. Der restliche Schaum gelangt zur Sekundärstufe 234 der selektiven Flotation, die hier aus zwei hintereinandergeschalteten Zellen 234' und 234" besteht. Die Schaumrinne ist mit 214 bezeichnet. Der dort vorhandene Schaum kann verworfen werden, oder aber besser noch in die Totalflotationsanlage 200 eingeleitet werden. Es wird in dieser ein Schlamm, der verworfen wird und Klarwasser erzeugt, das über Leitung 122 vor die Hauptflotationsanlage (Primärstufe) geleitet wird oder teilweise eingeleitet werden kann. Es wird der Schaum von ein bis drei ersten Stufen 10, 10' der Primär-Flotationsanlage in die Totalflotationsanlage 200 eingeleitet. Der Schaum der dann noch in dem Teil 112' der Schaumrinne der Primärstufe verbleibt, ist dann nicht mehr so stark mit Schmutzanteilen belastet, so daß der Gutstoff der Sekundär-Flotationsanlage 234 nicht weiter flotiert zu werden braucht. Bisher war es nämlich üblich, diesen Gutstoff wieder vor die Primärstufe 100 zurückzuleiten, was eine große Belastung dieser Primärstufe, insbesondere hinsichtlich dieser ersten Flotationszellen 10, 10' bedeutete.

Eine Anlage mit Wasch- und/oder Siebeinrichtungen eventuell auch als Kombination ist mit 235 strichpunktiert angedeutet.

## Patentansprüche

1. Verfahren zur Aufbereitung von Altpapier in einem Deinking-Verfahren mit einer selektiven, mehrstufigen, Flotationsanlage (32, 100), der mindestens eine weitere Reinigungsstufe nachgeschaltet ist, dadurch gekennzeichnet,
a) daß spätestens nach der dritten Flotationsstufe der selektiven Flotation (32, 100) der bis dahin angesammelte Flotationsschaum abgezogen wird,
b) aus dem abgezogenen Schaum in ein oder zwei, durch Wascheinrichtungen (37) und/oder Siebeinrichtungen (36) gebildeten Schritten die groben Verschmutzungen abgeschieden werden und gegebenenfalls die Fasern von dem Feinschmutz abgetrennt werden, wobei eine faserreiche Fraktion und eine oder zwei faserarme Fraktionen gebildet werden,
c) aus der oder den faserarmen Fraktionen durch eine Klarwasser erzeugende Druckentspannungsflotation die Verschmutzungen weitgehend abgeschieden werden,
d) die faserreiche Fraktion und das Klarwasser der Druckentspannungsflotation vor die Flotationsanlage (32, 100) zurückgeführt werden und der Schaum der restlichen Flotationsstufen selektiv nachflotiert wird.

2. Verfahren nach Anspruch 1, dadurch gekennzeichnet, daß die Siebsortierung zweistufig erfolgt wobei die faserarme Fraktion der ersten Stufe die groben Verschmutzungen umfaßt, die faserreiche Fraktion der ersten Stufe zur zweiten Sortierstufe geleitet wird, die faserreiche Fraktion der zweiten Stufe vor die selektive Flotation (32, 100) zurückgeführt wird und die faserarme Fraktion der zweiten Sortierstufe (37), die störstoffbeladen ist, gemeinsam mit der faserarmen Fraktion der ersten Stufe der Druckentspannungsflotation zugeführt wird.

3. Verfahren nach Anspruch 2, dadurch gekennzeichnet, daß die der selektiven Flotation nachgeschalteten Siebeinrichtungen (36, 37) in Reihe geschaltet sind und die erste von diesen Stufen ein Siebsortierer (36) mit einem Siebkorb einer Lochung zwischen 0,3 und 0,5 mm Durchmesser und die zweite Stufe ein Siebsortierer (37) mit einem Siebkorb mit einer schlitzförmigen Perforation einer Schlitzweite zwischen 0,05 und 0,1 mm ist.

4. Verfahren nach Anspruch 1, dadurch gekennzeichnet, daß der übrige, nicht in die Druckentspannungsflotationsanlage (200) eingespeiste Schaum tangential einem Hydrozyklon (103) zugeführt wird, der vorzugsweise zwei Fraktionen erzeugt, wobei aus dem Kern leichte Partikel und Gas vorzugsweise am oberen Ende und eine weniger Verschmutzungen enthaltende schwere Fraktion am unteren Ende abgezogen werden, und die untere Fraktion vor die selektive Flotationsanlage (100) und die Kernfraktion zur Druckentspannungsflotationsanlage (200) geführt wird.

5. Verfahren nach einem der Ansprüche 1-4, dadurch gekennzeichnet, daß nur der Schaum der ersten Stufe oder der ersten beiden Stufen der selektiven Flotationsanlage (32, 100) zur Druckentspannungsflotationsanlage (39, 200) geführt wird.

6. Verfahren nach Anspruch 5, dadurch gekennzeichnet, daß keine selektive Sekundär-Flotationsanlage vorhanden ist.

7. Verfahren nach einem der Ansprüche 1-5, dadurch gekennzeichnet, daß der restliche Schaum der selektiven Flotation (100) in eine ein- bis dreistufige Sekundär-Flotationsanlage (234) geleitet wird, deren Gutstoff nicht weiter flotiert wird.

8. Verfahren nach Anspruch 7, dadurch gekennzeichnet, daß der Gutstoff der Sekundär-Flotationsanlage (234) dem Gutstoff der Primär-Flotationsanlage (100) beigemengt wird.

9. Verfahren zur Aufbereitung von Altpapier in einem Deinking-Verfahren mit einer selektiven, mehrstufigen, Flotationsanlage (32), der mindestens eine weitere Reinigungsstufe nachgeschaltet ist, dadurch gekennzeichnet,
a) daß der gesamte gesammelte Flotationsschaum der selektiven Flotation sortiert wird, indem aus dem Schaum in ein oder zwei, durch Wascheinrichtungen (37) und/oder Siebeinrichtungen (36) gebildeten Schritten die groben Verschmutzungen abgeschieden werden und gegebenenfalls die Fasern von dem Feinschmutz abgetrennt werden, wobei eine faserreiche Fraktion und eine oder zwei faserarme Fraktionen gebildet werden,
b) aus der oder den faserarmen Fraktionen durch eine Klarwasser erzeugende Druckentspannungsflotation die Verschmutzungen weitgehend abgeschieden werden.
c) die faserreiche Fraktion und das Klarwasser der Druckentspannungsflotation vor die Flotationsanlage (32) zurückgeführt werden.

10. Verfahren nach Anspruch 9, dadurch gekennzeichnet, daß die Siebsortierung zweistufig erfolgt, wobei die faserarme Fraktion der ersten Stufe die groben Verschmutzungen umfasst, die faserreiche Fraktion der ersten Stufe zur zweiten Sortierstufe geleitet wird, die faserreiche Fraktion der zweiten Stufe vor die selektive Flotation (32) zurückgeführt wird und die faserarme Fraktion der zweiten Sortierstufe (37), die störstoffbeladenen ist, gemeinsam mit der faserarmen Fraktion der ersten Stufe der Druckentspannungsflotation zugeführt wird.

11. Verfahren nach Anspruch 10, dadurch gekennzeichnet, daß die der selektiven Flotation nachgeschalteten Siebeinrichtungen (36, 37) in Reihe geschaltet sind und die erste von diesen Stufen ein Siebsortierer (36) mit einem Siebkorb einer Lochung zwischen 0,3 und 0,5 mm Durchmesser und die zweite Stufe ein Siebsortierer (37) mit einem Siebkorb mit einer schlitzförmigen Perforation einer Schlitzweite zwischen 0,05 und 0,1 mm ist.

12. Verfahren zur Aufbereitung von Altpapier in einem Deinking-Verfahren mit einer selektiven, mehrstufigen, Flotationsanlage (52, 100), der mindestens eine weitere Reinigungsstufe nachgeschaltet ist, dadurch gekennzeichnet,
a) daß spätestens nach der dritten Flotationsstufe der selektiven Flotation (52, 100) der bis dahin angesammelte Flotationsschaum abgezogen wird,
b) aus dem abgezogenen Schaum durch eine Klarwasser erzeugende Druckentspannungs flotation die Verschmutzungen weitgehend abgeschieden werden,
c) das Klarwasser der Druckentspannungsflotation vor die Flotationsanlage (52, 100) zurückgeführt wird und der Schaum der restlichen Flotationsstufen selektiv nachflotiert wird.

13. Verfahren nach Anspruch 12, dadurch gekennzeichnet, daß der übrige, nicht in die Druckentspannungsflotationsanlage (200) eingespeiste Schaum tangential einem Hydrozyklon (103) zugeführt wird, der vorzugsweise zwei Fraktionen erzeugt, wobei aus dem Kern leichte Partikel und Gas vorzugsweise am oberen Ende und eine weniger Verschmutzungen enthaltende schwere Fraktion am unteren Ende abgezogen werden, und die untere Fraktion vor die selektive Flotationsanlage (100) und die Kernfraktion zur Druckentspannungsflotationsanlage (200) geführt wird.

14. Verfahren nach einem der Ansprüche 12 - 13, dadurch gekennzeichnet, daß nur der Schaum der ersten Stufe oder der ersten beiden Stufen der selektiven Flotationsanlage (52, 100) zur Druckentspannungsflotationsanlage (39, 200) geführt wird.

15. Verfahren nach Anspruch 14, dadurch gekennzeichnet, daß keine selektive Sekundär-Flotationsanlage vorhanden ist.

16. Verfahren nach einem der Ansprüche 12 - 14, dadurch gekennzeichnet, daß der restliche Schaum der selektiven Flotation (100) in eine ein- bis dreistufige Sekundär-Flotationsanlage (234) geleitet wird, deren Gutstoff nicht weiter flotiert wird.

17. Verfahren nach Anspruch 16, dadurch gekennzeichnet, daß der Gutstoff der Sekundär-Flotationsanlage (234) dem Gutstoff der Primär-Flotationsanlage (100) beigemengt wird.

## Claims

1. Process for the preparation of waste paper in a Deinking process with a selective multistage flotation system (32, 100), to which is connected at least one further cleaning stage, characterised in that:
a) at the latest after the third flotation stage of the selective flotation (32, 100) the flotation foam accumulated up to that point is extracted,
b) the coarse contaminants are separated out from the extracted foam in one or two stages consisting of washing devices (37) and/or sieve devices (36), and where applicable the fibres are separated from the fine dirt, whereby a high-fibre fraction and one or two low-fibre fractions are formed,
c) the contaminants can largely be precipitated from the low-fibre fraction or fractions by pressure relief flotation generating clear water,
d) the high-fibre fraction and the clear water from the pressure relief flotation are returned to a point before the flotation system (32, 100) and the foam from the remaining flotation stages is selectively refloated.

2. Process according to claim 1, characterised in that the sieve separation-takes place in two stages where the low-fibre fraction from the first stage contains the coarse contamination, the high-fibre fraction from the first stage is passed to a second separating stage, the high-fibre fraction from the second stage is returned to a point before the selective flotation (32, 100) and the low-fibre fraction from the second separating stage (37), which is loaded with contaminants, is passed to the pressure relief flotation together with the low-fibre fraction from the first stage.

3. Process according to claim 2, characterised in that the sieve devices (36, 37) connected after the selective flotation are connected in series and the first of these stages is a sieve separator (36) with a sieve basket with perforations of between 0.3 and 0.5 mm diameter and the second stage is a sieve separator (37) with a sieve basket with slotted perforations of slot width between 0.05 and 0.1 mm.

4. Process according to claim 1, characterised in that the remaining foam not introduced into the pressure relief flotation system (200) is passed tangentially to a hydrocyclone (103) which preferably generates two fractions, where light particles and gas from the core are extracted preferably at the upper end and a heavy fraction containing fewer contaminants at the lower end, and the lower fraction is passed to a point before the selective flotation system (100) and the core fraction to the pressure relief flotation system (200).

5. Process according to any of claims 1 to 4, characterised in that only the foam from the first stage or the first two stages of the selective flotation system (32, 100) is passed to the pressure relief flotation system (39, 200).

6. Process according to claim 5, characterised in that no selective secondary flotation system is present.

7. Process according to any of claims 1 to 5, characterised in that the remaining foam from the selective flotation (100) is passed to a one- to three-stage secondary flotation system (234), the usable product from which is not floated further.

8. Process according to claim 7, characterised in that the useable product from the secondary flotation system (234) is mixed with the usable product from the primary flotation system (100).

9. Process for preparation of waste paper in a Deinking process with a selective multistage flotation system (32), to which is connected at least one further cleaning stage, characterised in that
a) the total accumulated flotation foam of the selective flotation is separated by the coarse contaminants being precipitated out of the foam in one or two stages consisting of washing devices (37) and/or sieve devices (36) and where applicable the fibres are separated from the fine dirt, whereby a high-fibre fraction and one or two low-fibre fractions are formed,
b) the contaminants are largely precipitated out of the low-fibre fraction or fractions by pressure relief flotation generating clear water,
c) the high-fibre fraction and the clear water from the pressure relief flotation are returned to a point before the flotation system (32).

10. Process according to claim 9, characterised in that the sieve separation takes place in two stages, where the low-fibre fraction from the first stage contains the coarse contamination, the high-fibre fraction from the first stage is passed to a second separating stage, the high-fibre fraction from the second stage is returned to a point before the selective flotation (32) and the low-fibre fraction from the second separating stage (37), which is loaded with contaminants, is passed to the pressure relief flotation together with the low-fibre fraction from the first stage.

11. Process according to claim 10, characterised in that the sieve devices connected after the selective flotation (36, 37) are connected in series and the first of these stages is a sieve separator (36) with a sieve basket with perforations of between 0.3 and 0.5 mm diameter and the second stage is a sieve separator (37) with a sieve basket with slotted perforations of slot width between 0.05 and 0.1 mm.

12. Process for the preparation of waste paper in a Deinking process with a selective multistage flotation system (52, 100) to which is connected at least one further cleaning stage, characterised in that
a) at the latest after the third flotation stage of the selective flotation (52, 100) the flotation foam accumulated up to that point is extracted,
b) the contamination is largely precipitated from the extracted foam by pressure relief flotation generating clear water,
c) the clear water from the pressure relief flotation is returned to a point before the flotation system (52, 100) and the foam from the remaining flotation stages is selectively refloated.

13. Process according to claim 12, characterised in that the remaining foam not introduced into the pressure relief flotation system (200) is passed tangentially to a hydrocyclone (103) which preferably generates two fractions, where light particles and gas from the core are extracted preferably at the upper end and a heavy fraction containing fewer contaminants at the lower end, and the lower fraction is passed to a point before the selective flotation system (100) and the core fraction to the pressure relief flotation system (200).

14. Process according to any of claims 12 or 13, characterised in that only the foam from the first stage or the first two stages of the selective flotation system (52, 100) is passed to the pressure relief flotation system (39, 200).

15. Process according to claim 14, characterised in that no selective secondary flotation system is present.

16. Process according to any of claims 12 to 14, characterised in that the remaining foam from the selective flotation (100) is passed to a one- to three-stage secondary flotation system (234), the usable product from which is not floated further.

17. Process according to claim 16, characterised in that the usable product from the secondary flotation system (234) is mixed with the usable product from the primary flotation system (100).

## Revendications

1. Procédé de traitement de vieux papiers dans un procédé de désencrage avec une unité de flottation sélective à plusieurs étapes (32, 100), à laquelle on ajoute en aval au moins une autre étape de purification,
caractérisé en ce que
a) au plus tard après la troisième étape de flottation de la flottation sélective (32, 100) on recueille la mousse de flottation accumulée jusque là,
b) de la mousse recueillie on sépare les salissures grossières en une ou deux étapes formées par des dispositifs de lavage (37) et/ou des dispositifs de tamisage (36), et le cas échéant on sépare les fibres des salissures fines, ce qui forme une fraction riche en fibres et une ou deux fractions pauvres en fibres,
c) à partir de la ou des fractions pauvres en fibres on élimine en grande partie les salissures par une flottation à détente qui produit une eau claire,
d) on recycle la fraction riche en fibres et l'eau claire de la flottation à détente en amont de l'unité de flottation (32, 100) et on fait flotter sélectivement la mousse des autres étapes de flottation.

2. Procédé selon la revendication 1,
caractérisé en ce que
la classification par tamis a lieu en deux étapes où la fraction pauvre en fibres de la première étape comprend les salissures grossières, la fraction riche en fibres de la première étape est conduite à la deuxième étape de classification, on recycle la fraction riche en fibres de la deuxième étape en amont de la flottation sélective (32, 100) et on recycle la fraction pauvre en fibres de la deuxième étape de classification (37), qui est chargée de substances gênantes, avec la fraction pauvre en fibres de la première étape de la flottation à détente.

3. Procédé selon la revendication 2,
caractérisé en ce que
les dispositifs de tamisage branchés en aval de la flottation sélective (36, 37) sont branchés en série et que la première étape de ces étapes est un classificateur à tamis (36) avec un tamis à tambour ayant une perforation comprise entre 0,3 et 0,5 mm de diamètre et la deuxième étape est un classificateur à tamis (37) avec un tamis à tambour ayant une perforation en forme de fente avec une largeur de fente comprise entre 0,05 et 0,1 mm.

4. Procédé selon la revendication 1,
caractérisé en ce qu'
on introduit tangentiellement dans un hydrocyclone (103) la mousse restante non introduite dans l'unité de flottation à détente (200), qui produit de préférence deux fractions où on recueille à partir du noyau les particules légères et le gaz de préférence à l'extrémité supérieure et une fraction lourde contenant moins de salissures à l'extrémité inférieure et on conduit la fraction inférieure en amont de l'unité de flottation sélective (100) et la fraction de noyau dans l'unité de flottation à détente (200).

5. Procédé selon l'une des revendications 1 à 4,
caractérisé en ce qu'
on conduit seulement la mousse de la première étape ou des deux premières étapes de l'unité de flottation sélective (32, 100) à l'unité de flottation à détente (39, 200).

6. Procédé selon la revendication 5,
caractérisé en ce qu'
il n'existe pas d'unité de flottation secondaire sélective.

7. Procédé selon l'une des revendications 1 à 5,
caractérisé en ce qu'
on conduit le reste de mousse de la flottation sélective (100) dans une unité de flottation secondaire de une à trois étapes (234) dont on ne fait pas flotter la pâte à papier.

8. Procédé selon la revendication 7,
caractérisé en ce qu'
on ajoute la pâte à papier de l'unité de flottation secondaire (234) à la pâte à papier de l'unité de flottation primaire (100).

9. Procédé de traitement de vieux papiers dans un procédé de désencrage avec une unité de flottation sélective à plusieurs étapes (32), qui est suivie au moins d'une autre étape d'épuration,
caractérisé en ce que
a) on classifie toute la mousse de flottation recueillie à la flottation sélective, en séparant de la mousse les salissures grossières dans une ou deux étapes formées par les dispositifs de lavage (37) et/ou les dispositifs de tamisage (36) et le cas échéant on sépare les fibres de la salissure fine, en formant une fraction riche en fibres et une ou deux fractions pauvres en fibres,
b) à partir de la ou des fractions pauvres en fibres on sépare en grande partie les salissures par une flottation à détente produisant une eau claire,
c) on recycle la fraction riche en fibres et l'eau claire de la flottation à détente en amont de l'unité de flottation (32).

10. Procédé selon la revendication 9,
caractérisé en ce que
la classification a lieu en deux étapes, où la fraction pauvre en fibres de la première étape comprend les salissures grossières, ou conduit la fraction riche en fibres de la première étape à la deuxième étape de classification, ou recycle la fraction riche en fibres de la deuxième étape de classification en amont de la flottation sélective (32) et on réunit la fraction pauvre en fibres de la deuxième étape de classification (37), qui est chargée de substances gênantes à la fraction pauvre en fibres de la première étape de la flottation à détente.

11. Procédé selon la revendication 10,
caractérisé en ce que
les dispositifs de tamisage (36, 37) en aval de la flottation sélective sont branchés en série et la première de ces étapes est un classificateur à tamis (36) avec un tamis à tambour ayant une perforation comprise entre 0,3 et 0,5 mm de diamètre et la deuxième étape est un classificateur à tamis avec un tamis à tambour ayant une perforation en forme de fente avec une largeur de fente comprise entre 0,05 et 0,1 mm.

12. Procédé de traitement de vieux papiers dans un procédé de désencrage avec une unité de flottation sélective à plusieurs étapes (52, 100) à laquelle on ajoute en aval au moins une autre étape de purification,
caractérisé en ce que
a) au plus tard après la troisième étape de flottation de la flottation sélective (52, 100) on recueille la mousse accumulée jusque là,
b) de la mousse recueillie on sépare la plupart des salissures grâce à une flottation à détente produisant une eau claire,
c) on recycle l'eau claire de la flottation à détente en amont de l'unité de flottation (52, 100) et on fait flotter sélectivement la mousse des autres étapes de flottation.

13. Procédé selon la revendication 12,
caractérisé en ce qu'
on introduit tangentiellement dans un hydrocyclone (103) le reste de mousse qu'on n'a pas introduit dans l'unité de flottation à détente, qui produit de préférence deux fractions, où on soutire du noyau des particules légères et du gaz de préférence à l'extrémité supérieure et une fraction lourde contenant moins de salissures à l'extrémité inférieure et on conduit la fraction inférieure en amont de l'unité de flottation sélective (100) et la fraction de noyau dans l'unité de flottation à détente.

14. Procédé selon l'une des revendications 12 à 13,
caractérisé en ce qu'
on introduit seulement la mousse de la première étape ou des deux premières étapes de l'unité de flottation sélective (52, 100) dans l'unité de flottation à détente (39, 200).

15. Procédé selon la revendication 14,
caractérisé en ce qu'
il n'existe pas d'unité de flottation secondaire sélective.

16. Procédé selon l'une des revendications 12 à 14,
caractérisé en ce qu'
on conduit le reste de la mousse de la flottation sélective (100) dans une unité de flottation secondaire de une à trois étapes (234), dont on ne fait pas flotter la pâte à papier.

17. Procédé selon la revendication 16,
caractérisé en ce qu'
on ajoute la pâte à papier de l'unité de flottation secondaire (234) à la pâte à papier de l'unité de flottation primaire (100).
